# EUROPEAN PATENT APPLICATION

(11) **EP 1 956 356 A1**
(43) Date of publication of application: **13.08.2008**
(21) Application number: 07002799.0
(22) Date of filing: 09.02.2007
(51) Int. Cl.: G01M 11/00

(54) **Optical fiber connector inspection apparatus**

(71) Applicant: JDSU Deutschland GmbH, 72800 Eningen u.A. (DE)
(72) Inventor: Flettner, Axel, 71126 Gäufelden-Nebringen (DE); Lönne, Joachim, 72124 Pliezhausen (DE)
(74) Representative: Kohler Schmid Möbus

(57) **Abstract**

An optical fiber connector inspection apparatus (1), comprises:
a first light source (2) for illuminating a connecting end (3) of an optical fiber (4) in a first direction; and
an imaging system (5, 8) for capturing light scattered from the connecting end (3) for inspecting the connecting end (3); and
at least one second light source (6) for illuminating the connecting end (3) of the optical fiber (4) in at least one second direction (B), the second direction being oblique with respect to the first direction.

## Description

### Background of the invention

The present invention relates to an optical fiber connector inspection apparatus comprising a first light source for illuminating a connecting end of an optical fiber in a first direction; and an imaging system for capturing light scattered from the connecting end for inspecting the connecting end.

Optical fiber connector inspection apparatus or fiber inspection probes are known for inspecting a connecting end of an optical fiber, e.g., to detect damages or contaminations, which may lead to a reduced performance of the optical fiber.

Conventional fiber inspection probes use coaxial illumination for illuminating and inspecting a connecting end of an optical fiber. Thus, in order to inspect optical fiber connectors of various types (shapes), such as APC (Angled Polish Connector) and FPC (Fiber Physical Contact) connectors, an adapter for locating the optical fiber connector inspection apparatus with respect to the connecting end of the optical fiber has to be changed. In other words, a specific adapter is required for each type of optical fibers to be inspected.

### Object of the invention

It is the object of the present invention, to provide an optical fiber connector inspection apparatus which provides a flexible and easy way of inspecting connecting ends of optical fibers, particularly an optical fiber connector inspection apparatus which does not require using/changing an adapter when inspecting different optical fiber connecting ends.

### Summary of the invention

According to the present invention the object is achieved by providing an optical fiber connector inspection apparatus having the features of appended patent claim 1.

Accordingly, an optical fiber connector inspection apparatus, comprising a first light source for illuminating a connecting end of an optical fiber in a first direction; and an imaging system for inspecting said connecting end, is characterized by at least one second light source for illuminating the connecting end of the optical fiber in at least one second direction, said second direction being oblique with respect to the first direction.

Preferred embodiments of the present invention are described in the dependent claims, the wording of which is herewith incorporated by reference into the present description in order to avoid unnecessary repetition of text.

The present invention as defined in the appended claims provides a number of improvements over prior art optical fiber connector inspection apparatus. Owing to a novel illumination design comprising at least two mutually oblique directions of illumination, wherein one of said directions may correspond to conventional coaxial illumination, it is possible to inspect fiber connectors of different types, e.g., APC and FPC fiber connectors, without changing an adapter used to fix an optical fiber to be inspected to the inspection apparatus.

In an embodiment of the apparatus in accordance with the present invention the new illumination design comprises a ring illumination with light-guiding elements (light-guiding fibers), light-emitting portions (i.e., end portions) of which are arranged concentrically around the first direction of illumination, preferably around an imaging lens at a front end of an inspection tube in combination with conventional coaxial LED illumination.

The ring illumination, which by arrangement of the light-guiding fibers may be directed toward a common point, ensures that in every case enough light rays are scattered towards a detector or imaging plane of an image capturing unit used in the apparatus according to the present invention. According to an embodiment of the present invention the common point differs from a focal point of the imaging lens.

In this context, the term "in every case" encompasses various fiber connector designs and shapes. In particular, a good image contrast can be reached in case of inspecting APC connectors which have an angled surface with respect to a plane perpendicular to an axis of the optical fiber. The angle generally has a value of 8°. In this case, no change of adapter is required with respect to inspection of an FPC connector, which has an end surface comprised in the plane perpendicular to the optical fiber axis. The feature of having two mutually oblique illumination directions with, e.g., one direction tilted with respect to an optical axis of the imaging system, ensures that light rays may hit both an angled and a plane fiber connecting end for collection by an imaging lens according to embodiments of the proposed apparatus. In this way, no particular measures have to be undertaken when fixing embodiments of the proposed apparatus to an optical fiber for fiber end inspection.

According to further embodiments of the apparatus in accordance with the present invention, optimum image contrast of a plane comprising the connecting end may be automatically aligned with an autofocus function. This function may be realized by means of adjusting a suitable adjustable optical element placed in a light path of embodiments of the proposed apparatus. According to embodiments of the present invention, the adjustable optical element may be devised as a liquid lens, a focal length of which can be electrically controlled by applying a suitable control voltage. In this way, during optical fiber connector inspection the proposed apparatus will automatically adjust on the correct imaging plane by analyzing at least one captured image of the connecting end, e.g., a video image, and by determining the correct focal length by means of a mathematical algorithm. This algorithm can be implemented on a processing means by way of suitable software code and/or in hardware form.

An output of said algorithm can be used to apply a control signal in the form of the control voltage to the adjustable optical element, e.g., the liquid lens, thus adjusting an overall focal length of the imaging system to an optimum focal length for optimum contrast in the imaging plane. To this end, in the case of using the liquid lens as the adjustable optical element, the control signal may cause a change of the curvature of the liquid lens in order to achieve said optimum contrast in the imaging plane. In this way, there will no moving mechanical parts inside the proposed apparatus.

In order to further facilitate optical fiber connector inspection, in particular to assist a user who is looking on a live image of the connecting end during the inspection, further embodiments of the present invention propose using image processing to automatically locate, e.g., to center, an area of interest for inspection purposes in a predetermined location on a display unit. Preferably and without limitation, said predetermined location will be the center of a display screen. In the context of the present invention, said area of interest generally corresponds to a fiber core and a fiber cladding of an optical fiber to be inspected.

Especially when refraining from using any adapters to cover various fiber type setups, as enabled by means of the present invention, the area of interest may not always be mapped in the center of the image capturing unit (detector element) of the apparatus. Therefore, embodiments of the present invention propose analyzing a captured image of the connecting end by means of an image processing unit and to relocate or shift said area of interest to a predetermined location on the display unit.

Further advantages and characteristics of the present invention can be gathered from the following description of preferred embodiments given by way of example only with reference to the enclosed drawings. Features mentioned above as well as below can be used in accordance with the present invention either individually or in conjunction. The following description is not to be regarded as an exhaustive enumeration but rather as providing examples with respect to a general concept underlying the present invention.

### Brief description of the drawings

- Fig. 1: is an embodiment of the optical fiber connector inspection apparatus in accordance with the present invention;
- Fig. 2: is a detailed view of a front or imaging end of the apparatus in Fig. 1; and
- Fig. 3: is a sectional view of the apparatus along line III-III in Fig. 2.

### Detailed description

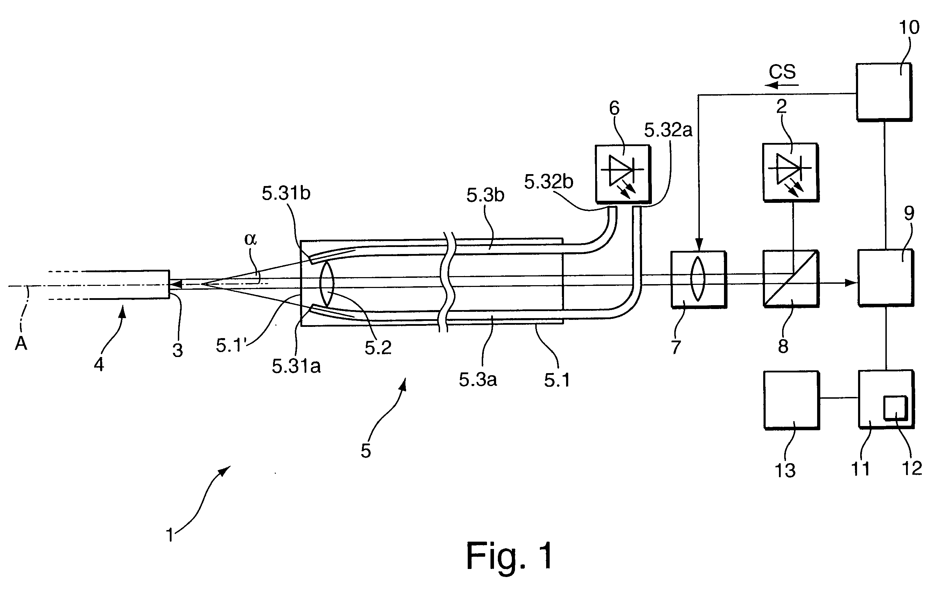

**Fig. 1** shows an optical fiber connector inspection apparatus **1.** The optical fiber connector inspection apparatus 1 (hereinafter also referred to as "apparatus") comprises a first light source **2** for illuminating a connecting end **3** of an optical fiber **4** in a first direction (e.g., coaxial illumination) and an imaging system **5** for inspecting the connecting end 3, i.e., for directing light, e.g., from light source 2 to the connecting end 3, and for capturing light scattered from the connecting end 3 to generate an image for optical fiber connector inspection. The apparatus 1 further comprises a second light source **6** for illuminating the connecting end 3 of optical fiber 4 in at least one second direction.

As will become apparent from the following description and as will be appreciated by a person skilled in the art, said first and second light sources 2, 6 may in practice by devised as only one physical entity, i.e., it is not required to provide two physically distinct light sources.

In the embodiment shown, the first and second light sources 2, 6 are devised in the form of light-emitting diodes (LEDs). The apparatus 1 further comprises an adjustable optical element **7** in the form of a liquid lens, a beam splitter **8,** an image capturing unit **9** for generating an image for optical fiber connector inspection, a control unit **10,** an image processing unit **11** providing an algorithmic function **12,** and a display unit **13.**

The imaging system 5 of apparatus 1 further comprises an inspection tube **5.1** having a front end **5.1'** which forms an imaging end of apparatus 1. At front end 5.1' the imaging system 5 comprises an imaging lens **5.2,** which is arranged inside inspection tube 5.1. At its outer periphery, inspection tube 5.1 comprises a number of light-guiding elements **5.3a, 5.3b,** which extend essentially parallel to a longitudinal axis of inspection tube 5.1, which corresponds to an axis **A** of optical fiber 4. In other words, for fiber connector inspection purposes respective axes of inspection tube 5.1 and optical fiber 4 are essentially aligned.

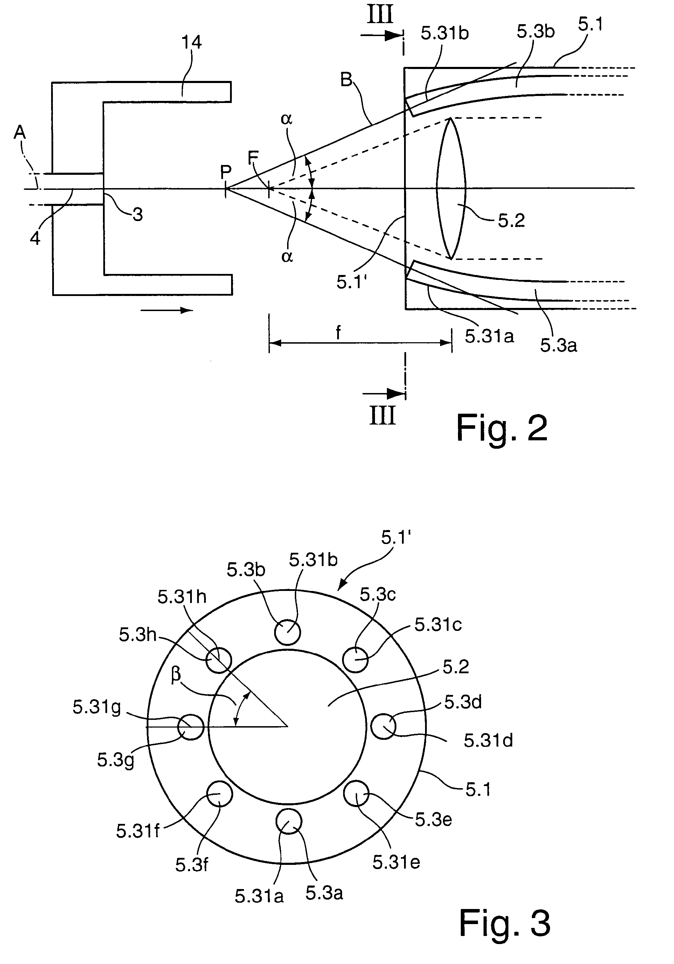

Respective first ends **5.31** a, **5.31** b of light-guiding elements 5.3a, 5.3b terminate at the front end 5.1' of inspection tube 5.1. Second ends **5.32a, 5.32b** of light-guiding elements 5.3a, 5.3b are operatively connected with the second light source 6. In this way, light emitted by the second light source 6 is guided towards the front end 5.1' of inspection tube 5.1 where it is emitted from the first ends 5.31a, 5.31 b of light-guiding elements 5.3a, 5.3b. Light-guiding elements 5.3a, 5.3b can be devised as light-guiding fibers and can also be referred to as light-emitting elements - at least with respect to their respective first ends 5.31 a, 5.31 b. Such light-emitting elements, i.e., the first ends 5.31 a, 5.31 b of light-guiding elements 5.3a, 5.3b, are arranged for illuminating the connecting end 3 of optical fiber 4 in the at least one second direction, as will be explained in more detail with reference to appended Figs. 2 and 3.

However, as can already be gathered from the schematic illustration of Fig. 1, for this purpose respective ends 5.31 a, 5.31 b of light-guiding elements 5.3a, 5.3b are tilted with respect to said longitudinal axis of inspection tube 5.1 at the front end 5.1' of the latter. This achieves illumination of connecting end 3 of optical fiber 4 in at least one second direction, which is oblique with respect to a first direction of illumination. As can be gathered from Fig. 1, said first direction of illumination is achieved by means of the first light source 2, a radiation of which is directed by means of beam splitter 8 through the adjustable optical element 7 along the longitudinal axis of inspection tube 5.1 towards imaging lens 5.2, by means of which it is focused onto the connecting end 3 of optical fiber 4. Scattered light from connecting end 3 is then retransmitted along essentially the same light path, i.e., via lens 5.2, inspection tube 5.1, and adjustable optical element 7 to beam splitter 8. Owing to a known operation of beam splitter 8 the light then propagates to image capturing unit 9 located behind beam splitter 8. image capturing unit 9 may be devised as a CCD-chip or any other device suitable for capturing/generating an image of optical fiber connecting end 3.

Light emitted from the first light source 2 generally propagates along a first direction which generally coincides with axis A of optical fiber 4. To this end, for inspection purposes optical fiber 4 is usually placed in an adapter (not shown in Fig. 1) for fixing the connecting end 3 to be inspected relative to inspection tube 5.1 with respect to distance (i.e., focal length of imaging lens 5.2) as well as with respect to orientation.

Owing to the above-described tilted termination of light-guiding elements 5.3a, 5.3b at the front end 5.1' of inspection tube 5.1, the apparatus 1 achieves at least one second direction of illuminating connecting end 3, said second direction being oblique with respect to the first direction of illumination. The second direction is tilted with respect to the first direction by an angle α, wherein the angle α preferably and without limitation takes on a value of 10°. In other words, the angle α may take on any value between 0° and 90°.

Image capturing unit 9 captures an image of connecting end 3 of optical fiber 4 and generates corresponding image data, e.g., for storing and/or displaying. Control unit 10 is coupled with image capturing unit 9 to analyze a captured image of the connecting end 3 to determine from the analysis a number of adjustment parameters for adjusting the adjustable optical element 7. The adjustment parameters are used to provide a control signal **CS** which is applied to the adjustable optical element 7 for adjusting the latter. In this way, the adjustable optical element 7 is controllably adjustable to achieve optimum image contrast in an imaging plane (not shown) of apparatus 1. In the embodiment shown, by means of control signal CS a focal length of the electrically controllable liquid lens, i.e., the adjustable optical element 7, is adjusted for achieving said optimum image contrast. In this way, connecting end 3 of optical fiber 4 can be inspected under optimum viewing/inspecting conditions.

Preferably, the control unit 10 automatically and/or repeatedly provides the control signal CS to the adjustable optical element 7 during optical fiber connector inspection, so that an autofocus function is effectively implemented owing to the present invention.

In addition, components 11-13 of apparatus 1 implement an (auto-)centering function, which will be described in the following: At least the image processing unit 11 including algorithmic function 12 is operatively connected with image capturing unit 9. In other words, image processing unit 11, which can be devised in the form of a microprocessor executing suitable software, e.g., for implementing said algorithmic function 12, is adapted to access/receive image data in/from image capturing unit 9. By means of algorithmic function 12, the image processing unit 11 is adapted to locate an area of interest for the optical fiber connector inspection performed by means of apparatus 1 in a predetermined position on display unit 13. Without the (auto-)centering function, due to misalignment of axis A of optical fiber 4 and the longitudinal axis of inspection tube 5.1, a captured image of connecting end 3 of optical fiber 4 would generally not be displayed in a central location on display unit 13. As already described above, by means of algorithmic function 12 the image processing unit 11 is enabled to automatically locate the area of interest during optical fiber connector inspection. Preferably, the area of interest, e.g., a fiber core and cladding (not shown) will be automatically located in the center region of display unit 13 in order to assist a user during optical fiber connector inspection.

As will be appreciated by a person skilled in the art, the present invention is not limited by any specific design of image processing unit 11 and/or display unit 13. Furthermore, control unit 10 and image processing unit 11, which have been depicted as separate entities in Fig. 1, need not be physically distinct. In other words, in further exemplary embodiments of the present invention a single processing unit, e.g., a microprocessor, may be used to provide control unit and image processing unit functionalities.

As will be further appreciated by a person skilled in the art, the above-described embodiment of apparatus 1 comprises different groups of components which are specifically adapted to provide different aspects of the present invention, i.e., illuminating the connecting end 3 of optical fiber 4 in at least two mutually oblique directions, (auto-)focusing a captured image of connecting end 3 for optimum contrast, and (auto-)locating an area of interest for optical fiber connector inspection.

While Fig. 1 shows an embodiment which comprises the totality of said components, the present invention also encompasses embodiments which implement only one or combinations of these aspects/components with the common object of facilitating optical fiber connector inspection with respect to the prior art

**Fig. 2** shows a detailed schematic diagram of the front or imaging end 5.1' of inspection tube 5.1 (cf. Fig. 1). Light-guiding elements 5.3a, 5.3b are curved inwardly at the front end 5.1' of inspection tube 5.1. In this way, the light-guiding elements 5.3a, 5.3b, respective first end 5.31 a, 5.31 b of which serve as light-emitting elements, are arranged so that they are pointed at a common point **P**, as will be explained in more detail below. Each of these light-emitting elements generally emits light around a direction denoted **B,** which is tilted by an angle α with respect to axis A, wherein said axis A generally corresponds to a first direction of illumination. The angle α preferably and without limitation takes on a value of 10°, which has been exaggerated in Fig. 2 for reason of clarity.

Common point P is located so that its position lies beyond a focal point **F** of imaging lens 5.2 (cf. Fig. 1), which is located at a distance f from imaging lens 5.2. In other words, the inward curvature of respective first ends 5.31 a, 5.31 b of light-guiding elements 5.3a, 5.3b is chosen so that imaginary extensions or prolongations of light-guiding elements 5.3a, 5.3b beyond front end 5.1' of inspection tube 5.1 along a direction of B intersect behind the focal point F of imaging lens 5.2 in said common point P. In this way, the totality of connecting end 3 of optical fiber 4 is illuminated by light emitted from light-guiding elements 5.3a, 5.3b.

Optical fiber 4 is placed in an adapter **14** which can be physically coupled (i.e., brought in mechanical contact) with front end 5.1' of inspection tube 5.1 by displacing adapter 14 in the direction of the arrow shown in Fig. 2. Adapter 14 is configured so that connecting end 3 of optical fiber 4 is located at focal point F for optical fiber connector inspection, when adapter 14 is in its operating position with respect to inspection tube 5.1, i.e., in physical contact with front end 5.1' of the latter.

**Fig. 3** shows a section along line III-III in Fig. 2. Respective first ends **5.31 a-h** of eight light-guiding/light-emitting elements **5.3a-h** are arranged around imaging lens 5.2 at the imaging end of apparatus 1 (Fig. 1), i.e., front end 5.1' of inspection tube 5.1, in a ring-like fashion for achieving ring illumination. Furthermore, they are arranged around the first direction of illumination in a plane which is perpendicular with respect to the first direction of illumination (the latter extending into the drawing plane of Fig. 3). The light-emitting elements, i.e., light-guiding elements 5.3a-h are arranged at regular angular intervals around the first direction of illumination. Said regular angular interval is denoted by means of an angle β, with β = 45°.

The proposed novel design of an optical fiber connector inspection apparatus, in particular according to the embodiment of Fig. 1, simplifies application of fiber inspection because a user only needs to plug the inventive apparatus on a fiber to be inspected without the need for further manipulations. Owing to the specific design of the inventive apparatus, which may comprise combinations of (at least) two-directional illumination with oblique illumination directions, image (auto-)focusing, and image (auto-)locating, there is no longer any need for adjusting a positioning of the apparatus nor for manually focusing on an imaging plane nor for choosing between various adapters in case of different shapes of the fiber connecting end to be inspected.

## Claims

1. An optical fiber connector inspection apparatus (1), comprising:
a first light source (2) for illuminating a connecting end (3) of an optical fiber (4) in a first direction; and
an imaging system (5, 8) for capturing light scattered from the connecting end (3) for inspecting the connecting end (3);
**characterized by**
at least one second light source (6) for illuminating the connecting end (3) of the optical fiber (4) in at least one second direction (B), the second direction being oblique with respect to the first direction.

2. The apparatus of claim 1, **characterized in that** the second direction (B) is tilted with respect to the first direction by an angle (α) comprised between 5° and 15°, preferably by 10°.

3. The apparatus of claim 1 or 2, **characterized in that** the second light source (6) comprises a number of light-emitting elements (5.3a-h), the light-emitting elements (5.3a-h) being arranged for illuminating the connecting end (3) of the optical fiber (4) in the at least one second direction (B).

4. The apparatus of claim 3, **characterized in that** the light-emitting elements (5.3ah) are arranged around the first direction, in particular in a plane perpendicular with respect to the first direction.

5. The apparatus of claim 3 or 4, **characterized in that** the light-emitting elements (5.3a-h) are arranged so that they are pointed at a common point (P).

6. The apparatus of claim 5, **characterized in that** said common point (P) differs from a focal point (F) of an imaging lens (5.2) at an imaging end (5.1') of the apparatus (1).

7. The apparatus of any one of claims 3 to 6, **characterized in that** the light-emitting elements are devised as light-guiding fibers (5.3a-h) coupled with the second light source (6).

8. The apparatus of any one of claims 1 to 7, **characterized by** an image capturing unit (9) in connection with the imaging system (5, 8) for generating an image for optical fiber connector inspection; and
an adjustable optical element (7) in a light path between the connecting end (3) and the image capturing unit (9), the adjustable optical element (7) being controllably adjustable to achieve optimum image contrast in the imaging plane.

9. The apparatus of claim 8, **characterized by** a control unit (10) providing a control signal (CS) for adjusting the adjustable optical element (7), the control unit (10) being coupled with the image capturing unit (9) and designed to analyse a captured image of the connecting end (3) to determine from the analysis a number of adjustment parameters for the adjustable optical element (7), the adjustment parameters being comprised in the control signal.

10. The apparatus of any one of claims 1 to 9, **characterized by** an image processing unit (11) and a display unit (13) in connection with an image capturing unit (9), the latter being connected with the imaging system (5, 8) for generating an image for optical fiber connector inspection, the image processing unit (11) being adapted to locate an area of interest for the optical fiber connector inspection in a predetermined position on the display unit (13).
